# EUROPÄISCHE PATENTSCHRIFT

(11) **EP 2 125 279 B1**
(45) Veröffentlichungstag und Bekanntmachung des Hinweises auf die Patenterteilung: **06.11.2013**
(21) Anmeldenummer: 08708277.2
(22) Anmeldetag: 28.01.2008
(51) Int. Cl.: B23D 21/06, B23D 21/08

(54) **ROHRTRENNVORRICHTUNG**
PIPE DISCONNECTING DEVICE
DISPOSITIF SÉPARATEUR DE TUYAUX

(30) Priorität: 20.02.2007 DE 102007008355
(43) Veröffentlichungstag der Anmeldung: 02.12.2009
(73) Patentinhaber: Illinois Tool Works Inc., Glenview, IL 60026-1215 (US)
(72) Erfinder: LIER, Andreas, 78247 Hilzingen (DE); TAMM, Markus, 88662 Überlingen (DE)
(74) Vertreter: Meissner, Bolte & Partner
(86) Internationale Anmeldenummer: PCT/EP2008/050956
(87) Internationale Veröffentlichungsnummer: WO 2008/101765

(56) Entgegenhaltungen:
- CH-A- 372 202
- DE-A1- 19 603 361
- DE-B4- 10 134 269
- US-A1- 2005 097 752

## Beschreibung

Der Erfindung betrifft eine Rohrtrennvorrichtung gemäß dem Oberbegriff von Anspruch 1.

Rohrtrennvorrichtungen sind bekannt, beispielsweise aus der CH 372 202, DE 101 34 269 B4, US 2005/0,097,752 A1.

Durch die Erfindung soll die Aufgabe gelöst werden, die manuelle Handhabung der Rohrtrennvorrichtung zu verbessern.

Diese Aufgabe wird gemäß der Erfindung durch die Merkmale von Anspruch 1 gelöst.

Demgemäß betrifft die Erfindung eine Rohrtrennvorrichtung, enthaltend eine Trennvorrichtung, welche einen Drehkörper enthält, der an einem Lagerkörper um eine Drehachse drehbar gelagert ist und mit einem Werkzeugträger für ein Trennwerkzeug zum Trennen eines Rohres versehen ist, wobei der Werkzeugträger am Drehkörper quer zur Drehachse bewegbar angeordnet ist; einen hebelartigen Vorsprung, welcher von dem Drehkörper oder von dem Werkzeugträger seitlich quer zur Drehachse wegragt; mindestens einen Handgriff an dem Vorsprung zum Drehen der Kombination aus Drehkörper, Werkzeugträger und Vorsprung um die Drehachse des Drehkörpers, dadurch gekennzeichnet, dass der mindestens eine Handgriff sich über den Querschnitt des Vorsprunges mit Abstand von der Oberfläche des Vorsprunges erstreckt, wobei zwischen dem Handgriff und der Oberfläche des Vorsprunges eine Durchgriffsöffnung für eine den Handgriff greifende Hand gebildet ist, und dass zwei der genannten Handgriffe auf voneinander abgewandten Seiten des Vorsprunges vorgesehen sind.

Die Erfindung ermöglicht die Erzielung folgender Vorteile: Eine Reduzierung der Gefahr, dass der Drehkörper mit dem Werkzeug durch eine auf den Handgriff wirkende manuelle Kraft gegenüber der Drehachse des Drehkörpers verkantet wird und dadurch ein Schnittversatz an dem abzutrennenden Rohr entsteht. Bei den bekannten Rohrtrennvorrichtungen, bei welchen der Handgriff von dem Vorsprung parallel zur Drehachse des Drehkörpers wegragt, besteht die Gefahr, dass ein großes Verkantungs-Quermoment und dadurch ein Schnittversatz erzeugt wird. Ein weiterer Vorteil der Erfindung besteht darin, dass auch Rohrbögen, welche einen kleinen Bogenradius haben, mit der Rohrtrennvorrichtung getrennt werden können, da der Handgriff gemäß der Erfindung den aus der Rohrtrennvorrichtung herausragenden Schenkel des Rohrbogens nicht behindert. Ferner ist der Handgriff gemäß der Erfindung für eine Person ergonomischer angeordnet als bei dem Stand der Technik.

Weitere Merkmale der Erfindung sind in den Unteransprüchen enthalten.

Die Erfindung ist nicht auf die in den beiliegenden Zeichnungen dargestellte Ausführungsform beschränkt. Die Erfindung ist auch auf andere Rohrtrennvorrichtungen anwendbar, beispielsweise auf solche, bei welchen der Werkzeugträger an einem Element verschiebbar ist, welches schwenkbar am Drehkörper gelagert ist. Trennwerkzeuge sind vorzugsweise Kreissägeblätter oder Trennschleifscheiben, jedoch kann das Trennwerkzeug bei anderen Rohrtrennvorrichtungen auch ein Abstechstahl sein, wie er beispielsweise auch bei Drehbänken verwendet wird und deshalb keinen Drehantrieb benötigt. In letzterem Falle kann jedoch ein Drehantrieb, insbesondere ein elektrischer, pneumatischer oder hydraulischer Motor zum Drehantrieb des Drehkörpers vorgesehen werden, bei einer Ausführungsform, bei welcher der Drehkörper nicht nur manuell am Drehgriff, sondern auch durch einen Motor drehbar ist.

Die Erfindung wird im Folgenden mit Bezug auf die beiliegenden Zeichnungen anhand von bevorzugten Ausführungsformen als Beispiele beschrieben. In den Zeichnungen zeigen:
- Fig. 1: eine perspektivische Ansicht einer Rohtrennvorrichtung nach der Erfindung, schräg von vorne gesehen,
- Fig. 2: eine Frontansicht der Rohrtrennvorrichtung von Fig. 1,
- Fig. 3: einen vertikalen Axialschnitt längs der Ebene III-III von Fig. 2,

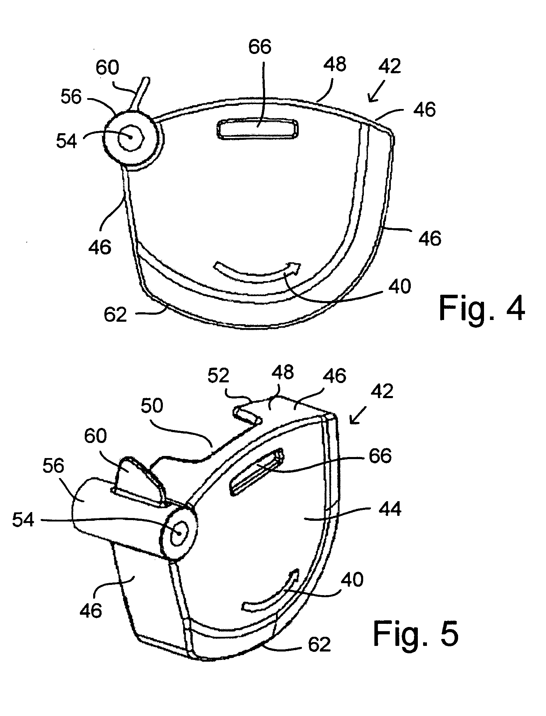

- Fig. 4: eine Frontansicht einer Schutzkappe der Rohrtrennvorrichtung,
- Fig. 5: eine perspektivische Darstellung der Schutzkappe, schräg von vorne oben gesehen,
- Fig. 6: einen Kurvenscheibenantrieb zur radialen Bewegung eines Schiebers, welcher ein Trennwerkzeug trägt,
- Fig. 7: schematisch eine Darstellung von Teilen der Rohrtrennvorrichtung, mit welchen eine abzutrennende Rohrlänge messbar und einstellbar ist.

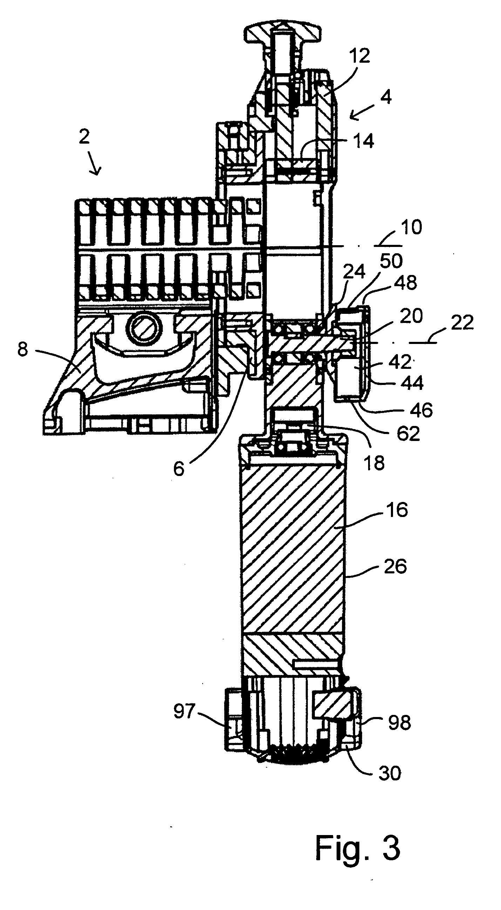

Die in den Zeichnungen dargestellte Rohrtrennvorrichtung enthält eine Einspannvorrichtung 2, beispielsweise nach Art eines Schraubstockes, zum Einspannen eines abzutrennenden Rohres, und eine Trennvorrichtung 4 zum Trennen eines in der Einspannvorrichtung eingespannten Rohres. Die Trennvorrichtung 4 enthält einen Führungsring 6, welcher mit einem Basiskörper 8 der Einspannvorrichtung 2 unbeweglich verbunden ist und eine Drehachse 10 (Fig. 3) definiert, um welche ein am Führungsring 6 drehbar gelagerter Drehkörper 12 der Trennvorrichtung 4 um 360° drehbar gelagert ist. Die Drehachse 10 des Drehkörpers 12 fluchtet mit der von der Einspannvorrichtung 2 definierten Rohrmittelachse des abzutrennenden Rohres.

Der Drehkörper 12 enthält einen Schieber 14, welcher im Drehkörper 12 radial zur Drehachse 10 des Drehkörpers 12 leicht verschiebbar geführt ist. Am Schieber 14 ist eine von einem Motor 16 über ein Getriebe 18 antreibbare Werkzeugwelle 20 drehbar gelagert. An ihr ist ein Trennwerkzeug 24 drehfest befestigbar, so dass es mit der Werkzeugwelle 20 rotiert. Die Drehachse 22 der Werkzeugwelle 20 ist parallel zur Drehachse 10 des Drehkörpers 12 angeordnet.

Das Trennwerkzeug 24 ist scheibenförmig und kann beispielsweise ein Kreissägeblatt oder eine Trennschleifscheibe sein.

Die Zeichnungen zeigen die Trennvorrichtung 4 in einer Drehrichtungs-Nullposition.

Hierbei ist das Trennwerkzeug 24 nach unten radial von dem abzutrennenden Rohr entfernt und ein mit dem Schieber 14 verbundener Vorsprung 26, welcher einen Motor 16 enthält oder durch ein Motorgehäuse mindestens teilweise gebildet ist, erstreckt sich vom Schieber 14 aus wie ein Hebel nach unten weg. Der Vorsprung 26 ist an seinem vom Schieber 14 entfernten äußeren Endabschnitt mit mindestens einem oder zwei Griffen 28 und 30 versehen. Der Vorsprung 26 erstreckt sich quer, vorzugsweise radial, zur Drehachse 10 des Drehkörpers 12.

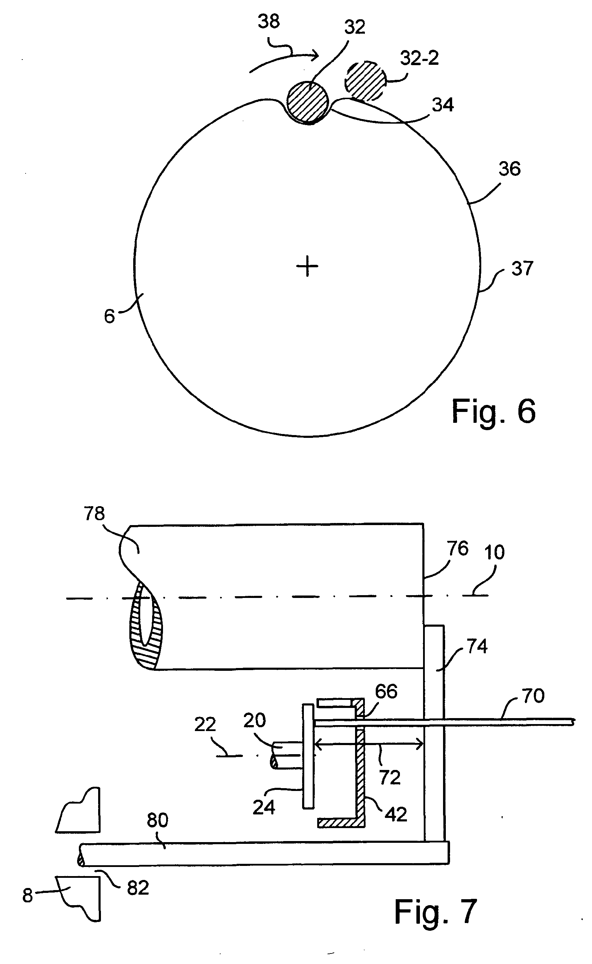

Bei der in den Zeichnungen dargestellten Drehrichtungs-Nullposition hängt der Schieber 14 mit einem an ihm befestigten Führungsbolzen 32 in einer Kurvenkerbe 34 einer sich über 360° erstreckenden Führungsbahn 36. Dies ist schematisch in Fig. 6 dargestellt. Der Führungsbolzen 32 ist an dem Schieber 14 befestigt. Die Führungsbahn 36 ist am Führungsring 6 oder an einer mit dem Führungsring 6 unverdrehbar verbundenen Kurvenscheibe gebildet. Der Abschnitt 37 der Führungsbahn beidseitig der Kurvenkerbe kann kreisförmig sein mit einem Kreismittelpunkt in der Drehachse 10 des Drehkörpers 12.

Wenn der Drehkörper 12 durch Drehen um seine Drehachse 10 aus der Drehrichtungs-Nullposition herausbewegt wird, wird der Führungsbolzen 32 aus der Kurvenkerbe 34 heraus auf den Führungsbahnabschnitt 37 hochgehoben, wie dies in Fig. 6 durch eine gestrichelt gezeichnete Position 32-2 des Führungsbolzens 32 gezeigt ist. Der Führungsbahnabschnitt 37 hat einen größeren Radius als das Wellental der Kurvenkerbe 34. Durch dieses Anheben des Führungsbolzens 32 aus der Kurvenkerbe 34 heraus auf den radial höheren Führungsbahnabschnitt 37 wird der Schieber 14 um eine entsprechende Strecke hochgehoben und damit auch das Trennwerkzeug 24 in ein abzutrennendes Rohr angehoben. Bei der weitergehenden Drehbewegung des Drehkörpers 12 und des Schiebers 14 und des Trennwerkzeugs um die Drehachse 10 des Drehkörpers 12, beispielsweise in Drehrichtung 38, bleibt das Trennwerkzeug 24 in der Wand des zu trennenden Rohres, so dass das Rohr getrennt wird. Am Ende von 360° der Drehbewegung des Drehkörpers 12 fällt der Führungsbolzen 32 wieder in die Kurvenkerbe 24 und damit auch das Trennwerkzeug 24 mit dem Schieber 14 radial aus dem Bereich des abzutrennenden Rohres.

Diese mit Bezug auf Fig. 6 beschriebene Möglichkeiten der radialen Zustellbewegungen des Trennwerkzeuges 24 radial zu dem abzutrennenden Rohr und von diesem Rohr wieder weg sind nur eine von mehreren möglichen Ausführungsformen. Andere Ausführungsformen aus dem Stand der Technik sind ebenfalls verwendbar.

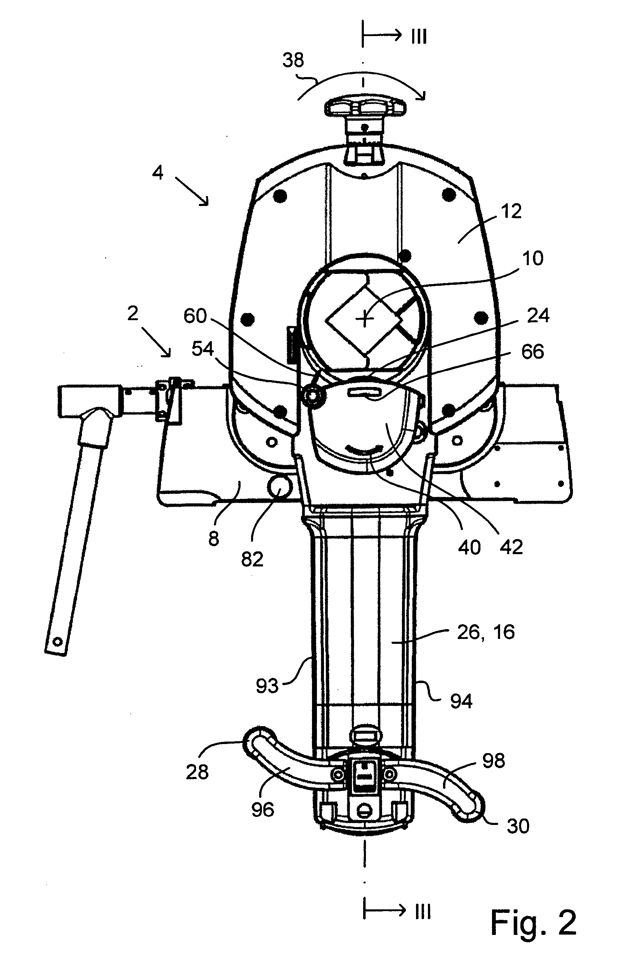

Die Drehrichtung 38 des Drehkörpers 12 zusammen mit dem Schieber 14 und dem Trennwerkzeug 24 ist vorzugsweise entgegengesetzt zur Rotationsdrehrichtung 40 des Trennwerkzeuges 24, wie dies beispielsweise in Fig. 2 durch Pfeile 38 und 40 dargestellt ist. Als Beispiel ist die Drehrichtung 38 des Drehkörpers 12 im Uhrzeigersinn und die Rotationsdrehrichtung 40 des Trennwerkzeuges 24 im Gegenuhrzeigersinn angegeben, in Vorderansicht auf die Trennvorrichtung 4 gesehen.

Vor dem Trennwerkzeug 24 ist eine Schutzkappe 42 angeordnet, um bei eingeschalteter Rohrtrennvorrichtung ein unbeabsichtigtes Berühren des Trennwerkzeuges 24 durch eine Person zu verhindern und um Späne abzufangen, welche von dem Trennwerkzeug 24 von dem abzutrennenden Rohr entfernt und weggeschleudert werden.

Die Schutzkappe 42 hat eine Frontwand 44 und eine davon in Richtung zum Trennwerkzeug 24 weg ragende Umfangswand 46. Die Umfangswand 46 hat in einem der Position des Rohres und der Drehachse 10 des Drehkörpers 12 radial gegenüberliegenden Anschnitt 48 eine Ausnehmung 50, durch welche das Trennwerkzeug 24 in Richtung zum Rohr herausragen kann. Die Ausnehmung 50 ist vorzugsweise eine Randausnehmung, welche sich bis in den Umfangsrand 52 der Umfangswand 46 erstreckt. Der Innendurchmesser der Umfangswand 46 ist radial zur Drehachse 22 der Werkzeugwelle größer als der Außendurchmesser des Trennwerkzeuges 24, so dass das Trennwerkzeug 24 in die Schutzkappe 42 hineinragen kann. Die Umfangswand 46 reicht axial bis zu der Position des Trennwerkzeuges 24 oder über das Trennwerkzeug 24 axial hinaus.

Die Schutzkappe 42 ist an den Schieber 14 um eine zur Drehachse 22 der Werkzeugwelle 20 parallele Schwenkachse 54 entgegen der Federkraft einer Feder in Richtung von der Drehachse 10 des Drehkörpers 12 weg schwenkbar gelagert. Die Feder ist in den Zeichnungen nicht sichtbar und vorzugsweise in einem Federgehäuse 56 untergebracht, welches zusammen mit der Schutzkappe 42 vorzugsweise ein einstückiger Körper ist.

Wenn der Schieber 14 zusammen mit dem Trennwerkzeug 24, beispielsweise wie dies vorstehend beschrieben wurde, radial bewegt wird, dann wird das Trennwerkzeug 24 an das Rohr angestellt und in die Rohrwand hinein bewegt, wobei das Rohr die Schutzkappe 42 radial wegdrückt, wobei die Schutzkappe 42 um ihre Schwenkachse 54 geschwenkt wird. Dadurch kann das Trennwerkzeug 24 innerhalb oder sehr nahe neben der Ausnehmung 50 aus der Schutzkappe 42 herausragen und in das Rohr eindringen.

Die Schutzkappe 42 ist mit einer Schutzrippe 60 versehen, welche in Drehrichtung 40 des Trennwerkzeuges 24 nach der Ausnehmung 50 angeordnet ist und vom Außenumfang der Umfangswand 46 der Schutzkappe 42 wegragt, wobei sie sich quer zur Drehrichtung 40 des Trennwerkzeuges 24 erstreckt und im Späneflug der Späne angeordnet ist, welche vom Trennwerkzeug 24 von dem abzutrennenden Rohr entfernt und abgeschleudert werden. Dadurch werden von der Schutzrippe 60 Rohrspäne gestoppt oder abgelenkt in eine Richtung, wo sie für eine die Rohrtrennvorrichtung bedienende Person wenig oder nicht störend sind.

Die Schutzrippe 60 ist vorzugsweise mit der Schutzkappe 42 ein einstückiger Materialkörper. Vorzugsweise befindet sich die Schutzrippe 60 auf dem Federgehäuse 56 der Schutzkappe 42.

Die Schwenkachse 54 und die Schutzrippe 60 der Schutzkappe 42 befinden sich in Drehrichtung 40 der Werkzeugwelle 20 und damit auch des Trennwerkzeuges 24 nach der Ausnehmung 50.

Die Umfangswand 46 ist auf ihrem der Ausnehmung 50 gegenüberliegenden unteren Umfangsabschnitt 62 in Umfangsrichtung rund, und hat einen vorzugsweise größeren Innenradius als der Radius des Trennwerkzeuges 24. Der mit der Ausnehmung 50 versehene obere Abschnitt 48 der Umfangswand 46 ist in Umfangsrichtung flacher ausgebildet als der gegenüberliegende untere Umfangsabschnitt 62.

In der Frontwand 44 der Schutzkappe 42 ist vorzugsweise eine Durchgangsöffnung 66 gebildet, welche an einer von der Werkzeugwelle 20 radial entfernten Stelle dem Trennwerkzeug 24 axial gegenüberliegend angeordnet ist. Dadurch kann entsprechend Fig. 7 ein Messstab 70 durch die Durchgangsöffnung 66 durchgesteckt werden bis zum Trennwerkzeug 24 zum Messen der Entfernung 72 des Trennwerkzeuges 24 von einem aus der Trennvorrichtung nach vorne herausragenden Rohrende eines abzutrennenden Rohres 78 oder von einem an der Rohrtrennvorrichtung axial positionierbaren Positionieranschlag 74, welcher zur Positionierung des Rohrendes 76 des abzutrennenden Rohres 78 vorgesehen werden kann. Der Positionieranschlag 74 ragt beispielsweise radial von einer Positionierstange 80 weg, welche sich parallel zur Drehachse 10 des Drehkörpers 12 erstreckt und beispielsweise in einer Bohrung 82 axial geführt ist und positioniert werden kann. Die Bohrung 82 befindet sich beispielsweise in einem Basiskörper 8 der Einspannvorrichtung 2.

Die Durchgangsöffnung 66 ist vorzugsweise eine Schlitzöffnung. In Anpassung an übliche Längenmessstäbe liegt die Schlitzlänge vorzugsweise im Bereich zwischen 10 mm und 25 mm und die Schlitzbreite liegt vorzugsweise im Bereich zwischen 2 mm und 8 mm.

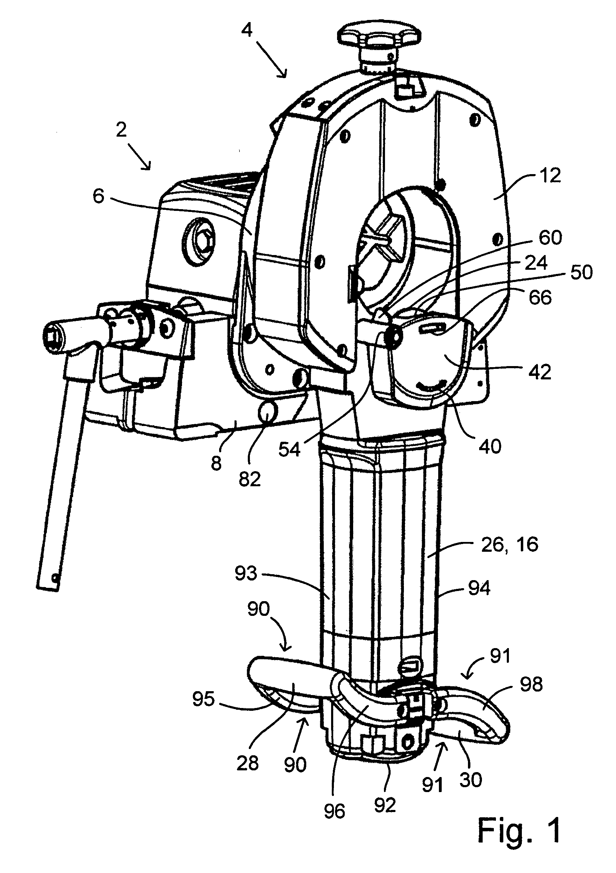

Wie die Figuren 1, 2 und 3 zeigen, ist an dem Vorsprung 26 mindestens ein Handgriff 28 oder 30 befestigt oder gebildet, welcher sich über mindestens einen Teil des Querschnittes des Vorsprunges 26 mit Abstand von der Oberfläche des Vorsprungs 28 erstreckt, wobei zwischen dem Handgriff 28 bzw. 30 und der Oberfläche des Vorsprunges 26 jeweils eine Durchgriffsöffnung 90 bzw. 91 für eine den Handgriff 28 bzw. 30 greifende Hand gebildet ist.

Der Handgriff 28 bzw. 30 kann sich über die vom Drehkörper 12 radial wegzeigende, in den Zeichnungen untere Umfangsfläche 92 des Vorsprunges 26 erstrecken.

Gemäß der in den Zeichnungen dargestellten bevorzugten Ausführungsform ist die Oberfläche 93 bzw. 94 des Vorsprunges 26, über die sich der mindestens eine Handgriff 28 bzw. 30 erstreckt, eine Oberfläche, welche in eine Umfangsrichtung 38 bzw. 40 um die Drehachse 10 des Drehkörpers 12 zeigt.

Der mindestens eine Handgriff 28 bzw. 30 befindet sich jeweils vorzugsweise am radial äußeren Endabschnitt des Vorsprunges 26.

Der mindestens eine Handgriff 28 bzw. 30 kann mit dem Vorsprung 26 jeweils durch einen einzigen, an der Mitte des Handgriffes angeordneten Steg, oder gemäß der bevorzugten Ausführungsform in den Zeichnung, jeweils an beiden Griffenden jeweils durch einen Steg 95, 96 bzw. 97, 98 verbunden sein.

Gemäß der bevorzugten Ausführungsform der Erfindung sind die Stege 95, 96, 97 und 98 bogenförmig ausgebildet, wobei die Stege 95 und 96 bzw. die Stege 97 und 98 des betreffenden Handgriffes 28 bzw. 30 bei jedem Handgriff parallel zueinander angeordnet sind und axial zur Drehachse 10 des Drehkörpers 12 gesehen eine Bogenform haben.

Wenn zwei Handgriffe 28 und 30 vorgesehen sind, können die Stege 95, 96, 97, 98 von beiden Handgriffen 28 und 30 in der gleichen Richtung gekrümmt sein, beispielsweise die Bogeninnenseite von allen Stegen zur Drehachse 10 oder von der Drehachse 10 weg zeigen. Vorzugsweise zeigt, axial zur Drehachse 10 gesehen, die Bogeninnenseite der Stege 95 und 96 des einen Handgriffes 28 zur Drehachse 10 des Drehkörpers 12, wohingegen die Bogeninnenseite der Stege 97 und 98 des anderen Handgriffes 30 von der Drehachse 10 weg zeigen. Hierbei ragen vorzugsweise die Stege 95, 96 des einen Handgriffes 28, deren Bogeninnenseite zur Drehachse 10 zeigt, in Drehrichtung 38 des Drehkörpers 12 von dem Vorsprung 26 weg, während die Stege 97 und 98 des anderen Handgriffes 30 in entgegen gesetzter Richtung, welche beispielsweise die Drehrichtung 40 des Trennwerkzeuges 24 ist, von dem Vorsprung 26 wegragen.

In den beschriebenen Ausführungsformen dient der Schieber als Werkzeugträger. Jedoch sind auch andere Ausführungsformen möglich. Beispielsweise ist eine Ausführung möglich, bei welcher der Schieber nicht am Drehkörper verschiebbar ist, sondern an einem Element, welch letzteres am Drehkörper um eine Schwenkachse schwenkbar gelagert ist.

Bei der als Beispiel beschriebenen Ausführungsform ist der Motor in dem Vorsprung untergebracht. Gemäß weiter Ausführungsformen könnte der Vorsprung auch ein Getriebe zwischen dem Motor und dem Trennwerkzeug enthalten. Gemäß nochmals weiterer Ausführungsform kann der Vorsprung durch den Motor selbst gebildet sein. In diesem Falle ist der mindestens eine Handgriff am Gehäuse des Motors befestigt.

## Patentansprüche

1. Rohrtrennvorrichtung, enthaltend eine Trennvorrichtung (4), welche einen Drehkörper (12) enthält, der an einem Lagerkörper (6) um eine Drehachse (10) drehbar gelagert ist und mit einem Werkzeugträger (14) für ein Trennwerkzeug (24) zum Trennen eines Rohres versehen ist, wobei der Werkzeugträger (14) am Drehkörper (12) quer zur Drehachse (10) bewegbar angeordnet ist;
einen hebelartigen Vorsprung (26), welcher von dem Drehkörper (12) oder von dem Werkzeugträger (14) seitlich quer zur Drehachse (10) wegragt; mindestens einen Handgriff (28, 30) an dem Vorsprung (26) zum Drehen der Kombination aus Drehkörper (12), Werkzeugträger (14) und Vorsprung (26)
um die Drehachse (10) des Drehkörpers (12),
**dadurch gekennzeichnet,**
**dass** der mindestens eine Handgriff (28, 30) sich über den Querschnitt des Vorsprunges (26) mit Abstand von der Oberfläche des Vorsprunges (26) erstreckt, wobei zwischen dem Handgriff (28, 30) und der Oberfläche des Vorsprunges (26) eine Durchgriffsöffnung (90, 91) für eine den Handgriff (28, 30) greifende Hand gebildet ist, und dass zwei der genannten Handgriffe (28, 30) auf voneinander abgewandten Seiten des Vorsprunges (26) vorgesehen sind.

2. Rohrtrennvorrichtung nach Anspruch 1,
**dadurch gekennzeichnet,**
**dass** die Oberfläche (93, 94) des Vorsprunges (26), über die sich der mindestens eine Handgriff (28, 30) mindestens teilweise erstreckt, eine Oberfläche ist, welche in eine Umfangsrichtung um die Drehachse (10) des Drehkörpers (12) zeigt.

3. Rohrtrennvorrichtung nach einem der vorhergehenden Ansprüche,
**dadurch gekennzeichnet,**
**dass** der mindestens eine Handgriff (28, 30) am radial äußeren Endabschnitt des Vorsprunges (26) angeordnet ist.

4. Rohrtrennvorrichtung nach einem der vorhergehenden Ansprüche,
**dadurch gekennzeichnet,**
**dass** der mindestens eine Handgriff (28, 30) an beiden Griffenden jeweils mit dem Vorsprung (26) verbunden ist.

5. Rohrtrennvorrichtung nach einem der vorhergehenden Ansprüche,
**dadurch gekennzeichnet, dass** die beiden Griffenden jeweils über einen bogenförmigen Steg (95, 96; 97, 98) mit dem Vorsprung (26) verbunden sind, wobei die Stege parallel zueinander angeordnet sind und axial zur Drehachse (10) des Drehkörpers (12) gesehen eine Bogenform haben.

6. Rohrtrennvorrichtung nach Anspruch 1 und 5,
**dadurch gekennzeichnet,**
**dass** axial zur Drehachse (10) des Drehkörpers (12) gesehen die Bogenform der Stege (95, 96) des einen Handgriffes (28) mit der Bogeninnenseite zur Drehachse (10) zeigt und die Bogenform der Stege (97, 98) des anderen Handgriffes (30) mit der Bogenaußenseite zur Drehachse (10) zeigt.

7. Rohrtrennvorrichtung nach einem der vorhergehenden Ansprüche,
**dadurch gekennzeichnet,**
**dass** der Vorsprung (26) einen Motor (16) zum Rotationsantrieb einer Werkzeugwelle (20) des Trennwerkzeuges (24) enthält.

8. Rohrtrennvorrichtung nach einem der vorhergehenden Ansprüche,
**dadurch gekennzeichnet,**
**dass** der Lagerkörper (6) mit einer Einspannvorrichtung (2) zum Einspannen eines abzutrennenden Rohres verbunden ist, so dass die Einspannvorrichtung (2) und die Trennvorrichtung (4) zusammen eine Baueinheit bilden.

## Claims

1. Pipe cutting apparatus, comprising a cutting apparatus (4) which comprises a rotational body (12) which is mounted on a bearing body (6) such that it can be rotated about a rotational axis (10) and is provided with a tool carrier (14) for a cutting tool (24) for cutting a pipe, the tool carrier (14) being arranged on the rotational body (12) such that it can be moved transversely with respect to the rotational axis (10);
a lever-like projection (26) which protrudes away from the rotational body (12) or from the tool carrier (14) laterally transversely with respect to the rotational axis (10);
at least one handle (28, 30) on the projection (26) for rotating the combination of rotational body (12), tool carrier (14) and projection (26) about the rotational axis (10) of the rotational body (12), **characterized in that** the at least one handle (28, 30) extends over the cross section of the projection (26) at a spacing from the surface of the projection (26), a through-passage opening (90, 91) for a hand which grips the handle (28, 30) being formed between the handle (28, 30) and the surface of the projection (26), and **in that** two of the said handles (28, 30) are provided on sides of the projection (26) which face away from one another.

2. Pipe cutting apparatus according to Claim 1, **characterized in that** that surface (93, 94) of the projection (26), over which the at least one handle (28, 30) extends at least partially, is a surface which points in a circumferential direction about the rotational axis (10) of the rotational body (12).

3. Pipe cutting apparatus according to one of the preceding claims, **characterized in that** the at least one handle (28, 30) is arranged on the radially outer end section of the projection (26).

4. Pipe cutting apparatus according to one of the preceding claims, **characterized in that** the at least one handle (28, 30) is connected at both handle ends in each case to the projection (26).

5. Pipe cutting apparatus according to one of the preceding claims, **characterized in that** the two handle ends are connected to the projection (26) in each case via an arcuate web (95, 96; 97, 98), the webs being arranged parallel to one another and having an arcuate shape as viewed axially with respect to the rotational axis (10) of the rotational body (12).

6. Pipe cutting apparatus according to Claims 1 and 5, **characterized in that**, as viewed axially with respect to the rotational axis (10) of the rotational body (12), the arcuate shape of the webs (95, 96) of one handle (28) points with the arc inner side towards the rotational axis (10) and the arc shape of the webs (97, 98) of the other handle (30) points with the arc outer side towards the rotational axis (10).

7. Pipe cutting apparatus according to one of the preceding claims, **characterized in that** the projection (26) comprises a motor (16) for rotationally driving a tool shaft (20) of the cutting tool (24).

8. Pipe cutting apparatus according to one of the preceding claims, **characterized in that** the bearing body (6) is connected to a clamping apparatus (2) for clamping a pipe to be cut, with the result that the clamping apparatus (2) and the cutting apparatus (4) together form one structural unit.

## Revendications

1. Dispositif séparateur de tuyaux contenant un dispositif séparateur (4) qui contient un corps rotatif (12) qui est monté de manière à pouvoir tourner autour d'un axe de rotation sur un corps de palier (6) et qui est pourvu d'un porte-outil (14) pour un outil de séparation (24) pour séparer un tuyau, le porte-outil (14) étant disposé de manière déplaçable transversalement à l'axe de rotation (10) sur le corps rotatif (12) ;
une partie saillante de type levier (26), qui fait partie saillante latéralement et transversalement par rapport à l'axe de rotation (10) depuis le corps rotatif (12) ou depuis le porte-outil (14) ; au moins une poignée (28, 30) sur la partie saillante (26) pour faire tourner la combinaison constituée du corps rotatif (12), du porte-outil (14) et de la partie saillante (26) autour de l'axe de rotation (10) du corps rotatif (12), **caractérisé en ce que**
l'au moins une poignée (28, 30) s'étend sur la section transversale de la partie saillante (26) à distance de la surface de la partie saillante (26), une ouverture de préhension (90, 91) pour une main saisissant la poignée (28, 30) étant formée entre la poignée (28, 30) et la surface de la partie saillante (26) et **en ce que** deux desdites poignées (28, 30) sont prévues sur des côtés mutuellement opposés de la partie saillante (26).

2. Dispositif séparateur de tuyaux selon la revendication 1,
**caractérisé en ce que**
la surface (93, 94) de la partie saillante (26), sur laquelle s'étend au moins en partie l'au moins une poignée (28, 30), est une surface qui est orientée dans une direction périphérique autour de l'axe de rotation (10) du corps rotatif (12).

3. Dispositif séparateur de tuyaux selon l'une quelconque des revendications précédentes,
**caractérisé en ce que**
l'au moins une poignée (28, 30) est disposée au niveau de la portion d'extrémité radialement extérieure de la partie saillante (26).

4. Dispositif séparateur de tuyaux selon l'une quelconque des revendications précédentes,
**caractérisé en ce que**
l'au moins une poignée (28, 30) est connectée aux deux extrémités de poignée à chaque fois à la partie saillante (26).

5. Dispositif séparateur de tuyaux selon l'une quelconque des revendications précédentes,
**caractérisé en ce que**
les deux extrémités de poignée sont chacune connectées par le biais d'une nervure en forme d'arc (95, 96 ; 97, 98) à la partie saillante (26), les nervures étant disposées parallèlement l'une à l'autre et ayant une forme arquée, vu axialement par rapport à l'axe de rotation (10) du corps rotatif (12).

6. Dispositif séparateur de tuyaux selon la revendication 1 et la revendication 5,
**caractérisé en ce que**
vu axialement par rapport à l'axe de rotation (10) du corps rotatif (12), la forme arquée des nervures (95, 96) de l'une des poignées (28) est tournée avec le côté intérieur de l'arc vers l'axe de rotation (10) et la forme arquée des nervures (97, 98) de l'autre poignée (30) est tournée avec le côté extérieur de l'arc vers l'axe de rotation (10).

7. Dispositif séparateur de tuyaux selon l'une quelconque des revendications précédentes,
**caractérisé en ce que**
la partie saillante (26) contient un moteur (16) pour l'entraînement en rotation d'un arbre d'outil (20) de l'outil de séparation (24).

8. Dispositif séparateur de tuyaux selon l'une quelconque des revendications précédentes,
**caractérisé en ce que**
le corps de palier (6) est connecté à un dispositif de serrage (2) pour serrer un tuyau à séparer, de telle sorte que le dispositif de serrage (2) et le dispositif séparateur (4) forment ensemble une unité structurelle.
